# EUROPÄISCHE PATENTSCHRIFT

(11) **EP 0 669 690 B1**
(45) Veröffentlichungstag und Bekanntmachung des Hinweises auf die Patenterteilung: **04.06.1997**
(21) Anmeldenummer: 94118448.3
(22) Anmeldetag: 24.11.1994
(51) Int. Cl.: H02G 11/00, B66C 13/12

(54) **Bewegliche Kabelverbindung**
Movable cable connection
Connexion de câble mobile

(30) Priorität: 24.02.1994 DE 4406027
(43) Veröffentlichungstag der Anmeldung: 30.08.1995
(73) Patentinhaber: Haake, André, D-46354 Südlohn (DE); Haake, Oliver, D-46354 Südlohn (DE); Haake, Patrick, D-46354 Südlohn (DE)
(72) Erfinder: Haake, André, D-46354 Südlohn (DE); Haake, Oliver, D-46354 Südlohn (DE); Haake, Patrick, D-46354 Südlohn (DE)
(74) Vertreter: Habbel, Hans-Georg, Dipl.-Ing.

(56) Entgegenhaltungen:
- EP-A- 0 282 389
- EP-A- 0 374 362
- DE-B- 1 211 889
- GB-A- 1 389 736

## Beschreibung

Die Erfindung bezieht sich auf eine bewegliche Kabelverbindung gemäß dem Oberbegriff des Anspruches 1.

Eine gattungsbildende Einrichtung wird in der EP 374 362 A1 beschrieben. Bei dieser bekannten Anordnung mußte festgestellt werden, daß bei großen Kabellängen im Kabelkanal, insbesondere beim Zurückfahren des Kabelwagens, Stauungen im Leiter auftreten können, die dazu führen, daß der Kabelwagen sich nicht weiterbewegen kann.

Aus der EP 282 389 B1 ist eine elektrische Verbindungsvorrichtung zwischen zwei Bündeln von leitenden Drähten und mit dieser Vorrichtung ausgestattetes Kraftfahrzeug bekanntgeworden, wobei keine Umlenkrolle, sondern eine Klammer an dem elektrischen Kabel vorgesehen ist, wobei diese Klammer über eine Federanordnung ortsfest angelenkt ist. Bei Zug an dem einen Trum der elektrischen Vorrichtung kann die Feder nachgeben. Durch diese Anordnung wird das ortsfeste Trum des Kabels überhaupt nicht beeinflußt und vor allen Dingen braucht die Feder in ihrem Ruhezustand einen gewissen Lagerraum, auch "Bahnhof" genannt, der störend wirken kann.

Aus der DE-AS 12 11 889 ist eine schleifkontaktlose Stromzuführung bekanntgeworden, die vorzugsweise für Krane und Laufkatzen mit einer Kabelführung bestimmt ist. Hier ist eine Umlenkrolle in dem Kabel vorgesehen, das über ein Spanngewicht oder einen Spannmotor und einen entsprechenden Seilzug mit Kraft beaufschlagt wird. Da dieser Seilzug nicht um eine Umlenkrolle geführt wird, ist ein sehr langer Freiraum erforderlich, um das Seil in der einen Endposition zu lagern, wobei auch für die Bewegung des Spanngewichtes Räumlichkeiten vorhanden sein müssen und die Anordnung eines Spannmotors in vielen Fällen zu aufwendig ist.

In der GB-A-13 89 736 wird eine bewegliche Kabelverbindung beschrieben, deren Umlenkungsvorrichtung über einen Seilzug mit Kraft beaufschlagt wird. Die Kraft wird hierbei über eine von dem beweglichen Maschinenteil angetriebene Kette erzeugt. Es sind besondere Antriebsmittel notwendig.

Der Erfindung liegt die Aufgabe zugrunde, die Beweglichkeit des Kabelwagens innerhalb des Kabelkanals sicherzustellen, indem Stauungen und Abknickungen des eigentlichen Leiters absolut verhindert werden, aber für die Spannvorrichtung kein großer Ruheraum erforderlich ist.

Diese der Erfindung zugrundeliegende Aufgabe wird durch die Lehre des Hauptanspruches gelöst.

Vorteilhafte Ausgestaltungen sind in den Unteransprüchen erläutert.

Insbesondere in den weiteren Unteransprüchen 3 bis 9 wird im einzelnen die Führung der Umlenkrolle im Kabelkanal erläutert, wobei es wichtig ist, daß die Umlenkrolle sich in dem Kabelkanal ohne Verkanten bewegen kann. Hierdurch werden hohe geschwindigkeiten gewährleistet und der Leiter wird durch die Rückhaltekraft der Expanderschnur besser geführt.

In den Unteransprüchen 10 und 11 wird eine Ausführungsform erläutert, die es ermöglicht, daß in den Kabelkanal eingetretenes Wasser abfließen kann. Dies wird durch zusätzliche Abflußbohrungen an der Unterseite des Kabelkanals erreicht, so daß ein Festfrieren des Leiters bei Minustemperaturen schaltet ist.

Durch den nachträglichen Einsatz eines entsprechend ausgebildeten Antifrostprofiles wird die Abführung des Wassers erleichtert und durch die Beschichtung oder Werkstoffauswahl für das Antifrostprofil wird ein Festfrieren verhindert.

Mit anderen Worten ausgedrückt erfolgt die Bewegung des Kabelwagens gegen die elastische Rückstellkraft einer hochelastischen Expanderschnur, die also bewirkt, daß das eigentliche Kabel stets straff gehalten wird, unabhängig davon, in welcher Richtung der Kabelwagen verfährt.

Hierbei ist es möglich, daß sogar eine mehrfache Umlenkung der elastischen Zugvorrichtung vorgesehen wird, so daß dadurch eine ausreichende Verschiebebewegung und eine ausreichende Vorspannung des Leiters erreicht wird.

Als Leiter können einadrige, mehradrige oder Leiter mit Abstandskörpern vorgesehen sein.

Zum Kabelkanal ist festzustellen, daß mehrere Leiter in einem Kabelkanal vorgesehen sein können, so daß die Umlenkrolle dann mehrere Führungen aufweisen kann. Die Umlenkung ist also als Umlenkwalze gestaltet. Natürlich können auch ein oder mehrere Kabelkanäle mit jeweils einem Leiter vorgesehen werden, so daß die häufig erforderliche Kurzschlußsicherheit erreicht wird.

Als elastische Zugvorrichtung wird eine Expanderschnur eingesetzt, die eine hohe Dehnfähigkeit hat, nämlich bis zu 100 bis 130 % ihrer Länge. Weiterhin können mehrere Expanderschnüre vorgesehen sein und es kann eine flaschenzugähnliche Kraftverteilung erreicht werden. Die eigentliche Umlenkung, d. h. also die vorzugsweise als Umlenkung eingesetzte Umlenkrolle oder Umlenkwalze hat eine Abrollsicherung für den Leiter, so daß ein Überspringen des Leiters nicht möglich ist. Das gleiche gilt für die für die Umlenkung der Expanderschnur erforderliche Umlenkung.

Die Ausbildung der eigentlichen Führungsschiene kann durch entsprechende Verrippung so stabil gestaltet werden, daß Verbiegungen trotz des ggf. durch die Expanderschnur ausgeübten Zuges verhindert werden.

Ausführungsbeispiele der Erfindung werden nachfolgend anhand der Zeichnungen erläutert. Die Zeichnungen zeigen dabei in
- Fig. 1: eine Ansicht auf eine Führungsschiene gemäß der Linie 1 - 1 in Fig. 2,
- Fig. 2: einen Schnitt durch die Führungsschiene in Fig. 1 gemäß der Linie 2 - 2 in Fig. 1 und in
- Fig. 3: in einer schaubildlichen Darstellungsweise eine etwas abgeänderte Ausführungsform der Umlenkrolle einschl. Abrollsicherung.

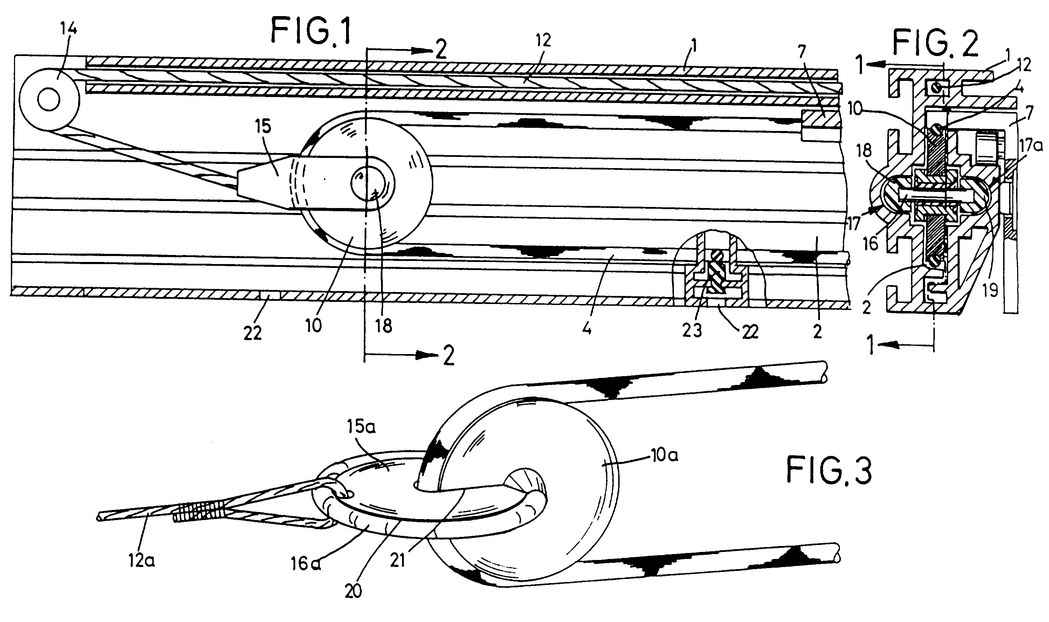

In den Zeichnungen zeigen die Fig. 1 und 2 einen Teil eines Kabelkanals 2, der durch eine Führungsschiene 1 gebildet wird. Innerhalb des Kabelkanals 2 ist ein Leiter 4 vorgesehen, der an einen Kabelwagen 7 anschließt. Der Leiter 4 ist anderenendes ortsfest am Kabelkanal festgelegt und zwischen dieser ortsfesten Festlegung und dem Kabelwagen 7 ist eine Umlenkung vorgesehen, die bei dem dargestellten Ausführungsbeispiel als Umlenkrolle 10 ausgebildet ist. Die Umlenkrolle 10 weist eine Abrollsicherung 15 auf. An diese Umlenkrolle 10 greift eine Expanderschnur 12 an, die ortsfest innerhalb oder außerhalb des Kabelkanals festgelegt ist und über eine Umlenkrolle 14 in den Kabelkanal geführt ist und hier an der Umlenkrolle 10 angreift, so daß eine ausreichende Reserve für die Längung der Expanderschnur 12 zur Verfügung steht. Auch die Umlenkrolle 14, die natürlich auch als andere Umlenkung ausgebildet sein kann, ist mit Abrollsicherungen ausgerüstet.

Durch die von der Expanderschnur 12 auf den Kabelwagen 7 mittelbar ausgeübte Kraft wird der Leiter 4 straff gehalten, so daß eine Rückführung des Leiters 4 in dem Kabelkanal 2 ohne Staucheffekt des Leiters 4 möglich wird.

Aus der Darstellung insbesondere in Fig. 2 ist erkennbar, daß die eigentliche Rollenachse 16 über die Oberseite der Umlenkrolle 10 hinaus verlängert ist und beispielsweise Verlängerungen 18 und 19 aufweist. Diese Verlängerungen greifen in kanalartige Führungsbahnen 17 und 17a, die in der eigentlichen Führungsschiene 1 ausgeformt sind, so daß dadurch eine Umlenkrollenführung erreicht wird, die ein Verkanten der Umlenkrolle 10 verhindert. Diese rollenführung kann z. B. aus Gummi- oder Kunststoffrollen bestehen, können aber auch einfache Gleitkörper sein oder die eigentliche Umlenkrollenachse 16 ist stiftartig verlängert und bildet dadurch, ausgebildet aus entsprechend gleitfähigem Kunststoff, die eigentliche Umlenkrollenführung.

Die Zeichnungen in Fig. 1 und 2 zeigen, daß in der Führungsschiene 1 Entwässerungsbohrungen 22 vorgesehen sind, so daß ein schnelles Abführen des Wassers und damit ein Gefrieren von Wasser innerhalb der eigentlichen Führungsschiene ausgeschaltet ist. Hierbei zeigt Fig. 1, daß in das Profil der Führungsschiene auch ein Antifrostprofil 23 eingesetzt sein kann, das ein Abführen des Wassers zur Entwässerungsbohrung 22 ermöglicht, wobei dieses Antifrostprofil aus entsprechendem Werkstoff ausgebildet sein kann oder eine Oberflächenbeschichtung aufweist, die ein Gefrieren des Wassers verhindert.

Schließlich ist in Fig. 3 eine Ausführungsform für die Umlenkrollenführung dargestellt, wobei die Umlenkrolle 10a von einer ringförmigen Rollenachse 16a durchgriffen wird, an die die Expanderschnur 12a angreift. Hierbei kann diese ringförmige Rollenachse 16a vollflächig mit einer Ringführung 20 ausgerüstet sein, in der ein Einschnitt 21 vorgesehen ist, wobei dann diese Ringführung 20 gleichzeitig die Abrollsicherung 15a darstellt. Kann sich die Umlenkrollenachse 16a an der Ringführung 20 bewegen, also abrollen, wird gleichzeitig der Rollwiderstand der eigentlichen Umlenkrollenführung innerhalb der Führungsschiene 1 erheblich vermindert.

## Patentansprüche

1. Bewegliche Kabelverbindung mit wenigstens einem elektrischen Leiter mit an seinen beiden Längsenden angeordneten Anschlußkontakten, wobei eine Führungsschiene (1) vorgesehen ist mit wenigstens einem Kabelkanal (2), der eine solche Höhe aufweist, daß mindestens zwei Leiter (4) übereinander in ihm Platz haben und das eine Leitungsende des Leiters (4) ortsfest am Ende des Kabelkanals (2) angeordnet ist und die Leitung (4) innerhalb des Kabelkanales (2) um eine als Umlenkrolle (10, 10a) mit der Rollenachse (16, 16a) ausgebildete Umlenkung geführt ist und das Leitungsende an einen Kabelwagen (7) anschließt, der in den Kabelkanal (2) eingreift, dadurch gekennzeichnet, daß die Umlenkung von einer elastischen Expanderschnur (12) gehalten ist, die eine Bewegung des Kabelwagens (7) durch Längung oder Verkürzung ermöglicht und ebenfalls um wenigstens eine Umlenkrolle (14) geführt ist.

2. Bewegliche Kabelverbindung nach Anspruch 1, dadurch gekennzeichnet, daß die Umlenkrolle (10, 10a) mit einer Abrollsicherung (15, 15a) versehen ist.

3. Bewegliche Kabelverbindung nach Anspruch 1 oder 2, dadurch gekennzeichnet, daß die Umlenkrolle (10) in der Führungsschiene (1) durch Verlängerung der Rollenachse (16) gelagert ist.

4. Bewegliche Kabelverbindung nach Anspruch 3, dadurch gekennzeichnet, daß in der Führungsschiene (1) sich in Längsachse der Führungsschiene (1) erstreckende kanalartige rungsbahnen (17) und (17a) vorgesehen sind, in die die Verlängerungen (18) und (19) der Rollenachse (16) eingreifen.

5. Bewegliche Kabelverbindung nach Anspruch 3 oder 4, dadurch gekennzeichnet, daß die Rollenachse (16) die Verlängerungen (18) und (19) bildende Aufsatzstücke trägt, die in die kanalartigen Führungsbahnen (17) und (17a) eingreifen.

6. Bewegliche Kabelverbindung nach Anspruch 3 oder 4, dadurch gekennzeichnet, daß die Rollenachse (16) einteilig bis in die kanalartigen Führungsbahnen (17) und (17a) reichend ausgebildet ist.

7. Bewegliche Kabelverbindung nach einem der vorhergehenden Ansprüche, dadurch gekennzeichnet, daß die Rollenachse (16a) der lenkrolle (10a) als Ringführung (20) gebildet ist, die in den kanalartigen rungsbahnen (17) und (17a) verläuft und an die die Expanderschnur (12a) anschließt.

8. Bewegliche Kabelverbindung nach Anspruch 7, dadurch gekennzeichnet, daß die Ringführung (20) vollflächig ausgebildet ist mit einem Einschnitt (21) für die Umlenkrolle (10a) und dadurch gleichzeitig die Abrollsicherung (15a) bildet.

9. Bewegliche Kabelverbindung nach einem der vorhergehenden Ansprüche, dadurch gekennzeichnet, daß die Führungsschiene (1) wässerungsbohrungen (22) aufweist.

10. Bewegliche Kabelverbindung nach Anspruch 9, dadurch gekennzeichnet, daß in die Führungsschiene ein Antifrostprofil (23) eingesetzt ist, das aufgrund seiner Oberflächengestaltung das möglicherweise vorhandene Wasser zur Entwässerungsbohrung (22) führt.

11. Bewegliche Kabelverbindung nach Anspruch 10, dadurch gekennzeichnet, daß das Antifrostprofil (23) aufgrund einer Beschichtung oder Werkstoffauswahl ein Festfrieren verhindert.

12. Bewegliche Kabelverbindung nach einem der vorhergehenden Ansprüche, dadurch gekennzeichnet, daß die Umlenkung als Umlenkwalze ausgebildet ist.

## Claims

1. A movable cable connection comprising at least one electrical conductor with connection contacts arranged at its two longitudinal ends, a guide rail (1) being provided with at least one cable duct (2) of such a height that there is space therein for at least two conductors (4) disposed one above the other, one of the ends of the conductor (4) being arranged fixedly at the end of the cable duct (2) and the conductor (4) being guided within the cable duct (2) about a deflector constructed as a deflection roller (10, 10a) with roller shaft (16, 16a), the conductor end being connected to a cable trolley (7) which engages in the cable duct (2), characterised in that deflection is maintained by a resilient expander cord (12) which enables movement of the cable trolley (7) through lengthening or shortening and is likewise guided about at least one deflection roller (14).

2. A movable cable connection according to claim 1, characterised in that the deflection roller (10, 10a) is provided with a safeguard (15, 15a) against unrolling.

3. A movable cable connection according to claim 1 or claim 2, characterised in that the deflection roller (10) is mounted in the guide rail (1) by extension of the roller shaft (16).

4. A movable cable connection according to claim 3, characterised in that in the guide rail (1) there are provided duct-type guide paths (17) and (17a) which extend along the longitudinal axis of the guide rail (1) and in which the extension portions (18) and (19) of the roller shaft (16) engage.

5. A movable cable connection according to claim 3 or claim 4, characterised in that the roller shaft (16) supports the cap members which form the extension portions (18) and (19) and which engage in the duct-type guide paths (17) and (17a).

6. A movable cable connection according to claim 3 or claim 4, characterised in that the roller shaft (16) is constructed in one piece to extend into the duct-type guide paths (17) and (17a).

7. A movable cable connection according to any one of the preceding claims, characterised in that the roller shaft (16a) of the deflection roller (10a) is constructed as a annular guide (20) extending in the duct-type guide paths (17) and (17a) and adjoined by the expander cord (12a).

8. A movable cable connection according to claim 7, characterised in that the annular guide (20) is solid except for a notch (21) for the deflection roller (10a) and thereby simultaneously forms the unroll safeguard (15a).

9. A movable cable connection according to any one of the preceding claims, characterised in that the guide rail (1) comprises drain holes (22).

10. A movable cable connection according to claim 9, characterised in that an antifrost section (23) is inserted into the guide rail, which, owing to the shape of its surface, guides any water which may be present to the drain hole (22).

11. A movable cable connection according to claim 10, characterised in that the antifrost section (23) prevents freezing owing to a coating or the type of material selected.

12. A movable cable connection according to any one of the preceding claims, characterised in that the deflection device is constructed as an idle roll.

## Revendications

1. Raccord de câbles mobile comprenant au moins un conducteur électrique muni de contacts de raccordement agencés à ses deux extrémités, dans lequel il est prévu une glissière de guidage (1) comprenant au moins un canal de câble (2) ayant une hauteur telle qu'il y a à l'intérieur de la place pour au moins deux conducteurs (4) disposés l'un au-dessus de l'autre, une extrémité du conducteur (4) étant fixée à l'extrémité du canal de câble (2), dans lequel le conducteur (4) est conduit à l'intérieur du canal de câble (2) autour d'un renvoi construit sous la forme d'une poulie de renvoi (10, 10a) ayant un axe de poulie (16, 16a) et dans lequel l'extrémité du conducteur est raccordée à un chariot de câble (7) qui pénètre dans le canal de câble (2), caractérisé en ce que le renvoi est tenu par un cordon extenseur (12) élastique qui permet un mouvement du chariot de câble (7) par allongement ou rétrécissement et qui est également conduit autour d'au moins une poulie de renvoi (14).

2. Raccord de câbles mobile selon la revendication 1, caractérisé en ce que la poulie de renvoi (10, 10a) est munie d'un frein de dérouleur (15, 15a).

3. Raccord de câbles mobile selon la revendication 1 ou 2, caractérisé en ce que la poulie de renvoi (10) est logée dans la glissière de guidage (1) par prolongement de l'axe de poulie (16).

4. Raccord de câbles mobile selon la revendication 3, caractérisé en ce qu'il est prévu dans la glissière de guidage (1) des voies de guidage (17) et (17a) en forme de canaux qui s'étendent selon l'axe longitudinal de la glissière de guidage (1) et dans lesquelles pénètrent les prolongements (18) et (19) de l'axe de poulie (16).

5. Raccord de câbles mobile selon la revendication 3 ou 4, caractérisé en ce que l'axe de poulie (16) porte des chapeaux qui forment les prolongements (18) et (19) et qui pénètrent dans les voies de guidage (17) et (17a) en forme de canaux.

6. Raccord de câbles mobile selon la revendication 3 ou 4, caractérisé en ce que l'axe de poulie (16) est construit d'une pièce s'étendant jusque dans les voies de guidage (17) et (17a) en forme de canaux.

7. Raccord de câbles mobile selon l'une des revendications précédentes, caractérisé en ce que l'axe de poulie (16a) de la poulie de renvoi (10a) est construit sous forme de guide annulaire (20) qui passe dans les voies de guidage (17) et (17a) en forme de canaux et auquel se raccorde le cordon extenseur (12a).

8. Raccord de câbles mobile selon la revendication 7, aractérisé en ce que le guide annulaire (20) est en forme de surface pleine avec une entaille (21) pour la poulie de renvoi (10a) et forme ainsi en même temps le frein de dérouleur (15a).

9. Raccord de câbles mobile selon l'une des revendications précédentes, caractérisé en ce que la glissière de guidage (1) comporte des trous de drainage (22).

10. Raccord de câbles mobile selon la revendication 9, caractérisé en ce que dans la glissière de guidage est agencé un profilé antigel (23) qui, à cause de la forme de sa surface, conduit l'eau éventuellement présente vers le trou de drainage (22).

11. Raccord de câbles mobile selon la revendication 10, caractérisé en ce que le profilé antigel (23) empêche le gel grâce à son revêtement ou grâce au choix de sa matière constituante.

12. Raccord de câbles mobile selon l'une des revendications précédentes, caractérisé en ce que le renvoi est en forme de cylindre de renvoi.
